(19) Europäisches Patentamt / European Patent Office / Office européen des brevets

(11) **EP 2 479 946 A1**

(12) **EUROPEAN PATENT APPLICATION**

(43) Date of publication:
**25.07.2012 Bulletin 2012/30**

(51) Int Cl.:
***H04L 25/02*** (2006.01)

(21) Application number: **11000396.9**

(22) Date of filing: **19.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **MIMOON GmbH**
**47057 Duisburg (DE)**

(72) Inventor: **Sergeij, Goldyrjew**
**47053 Duisburg (DE)**

(74) Representative: **Eisenführ, Speiser & Partner**
**Postfach 31 02 60**
**80102 München (DE)**

Remarks:
Amended claims in accordance with Rule 137(2) EPC.

(54) **Low complexity adaptive channel interpolation**

(57) The present invention relates to a method and apparatus for channel estimation in a multi-carrier transmission system involving pilot patterns. A channel estimation (701) is performed at pilot positions of the pilot pattern to obtain first channel estimates. Then, a robust interpolation (7021) with predetermined fixed coefficients is used to provide a mismatched interpolation or interpolator for sub-carriers with missing pilot signals to obtain second channel estimates. The first channel estimates are improved by applying adaptive noise suppression (7023) at the pilot positions to obtain improved first channel estimates which are used for compensation (7024) of mismatches of the second channel estimates.

FIG. 5

EP 2 479 946 A1

**Description**

## FIELD OF THE INVENTION

The present invention relates to a method, apparatus and computer program product for adaptive channel estimation in network systems, in particular those networks systems using Orthogonal Frequency Division Multiplexing (OFDM) transmission, such as for example cellular network systems according to the Long Term Evolution (LTE) standard.

## BACKGROUND OF THE INVENTION

Wireless communications systems transmit data over a channel with varying characteristics in both time and frequency. The variation in time is usually caused by movements of a mobile station (or mobile terminal or user equipment in LTE terms) at the transmitting and/or or receiving end. The variation in frequency on its part arises from signal propagation over the different paths. The signal components arrive at the receive antenna having different delays, amplitudes, and phases. This multipath propagation is responsible for the frequency selectivity of a wireless channel. Typically, a wireless channel severely affects the data transmission. To be able to decode the information the signal needs to be properly recovered in the receiver. Therefore, deployment of an equalizer is necessary to compensate for signal degradations.

The use of an OFDM system allows for a low complexity equalization of the disturbed signal. OFDM is a multicarrier transmission scheme where the whole system bandwidth is divided into smaller data streams. These data streams are transmitted using different sub-carriers which are orthogonal to each other. Thus, each sub-carrier carries a portion of the total data amount. An Inverse Fast Fourier Transform (IFFT) in the transmitter and a Fast Fourier Transform (FFT) in the receiver facilitates an efficient implementation of an OFDM transmission. Orthogonality of the OFDM subcarriers means that each subcarrier has an integer number of cycles in the FFT calculation interval and that the spectrum of a subcarrier contains spectral nulls at all other subcarrier frequencies.

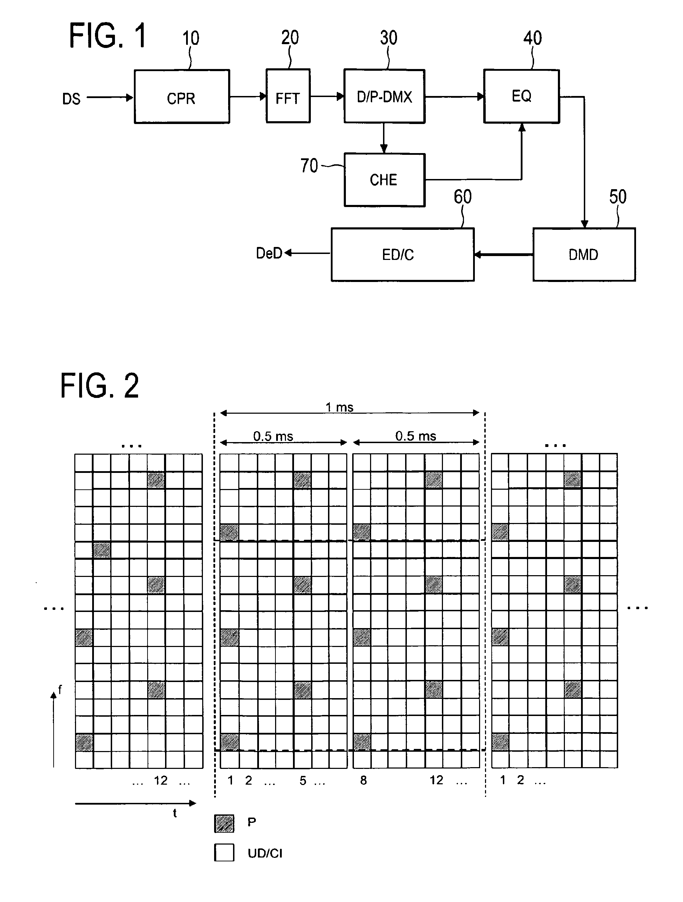

Fig. 1 shows a baseband processing chain of a receiver of a multicarrier communications system. After converting the analog baseband signal to its digital counterpart signal (DS) by means of an Analog-to-Digital Converter (ADC, not shown) a cyclic prefix (CP) which serves as a guard interval and which is inserted before transmitting the data needs to be removed in CP removal stage or unit (CPR) 10. Thus, the transient effects caused by the impulse response of the communication channel can be removed and inter-symbol-interferences (ISI) can be avoided. In a subsequent FFT stage or unit 20, the signal is converted to the frequency domain and a simple frequency-domain equalizer (EQ) 40 recovers the distorted signal. To achieve this, the equalizer 40 requires accurate estimation of the propagation channel. For this reason, some of the sub-carriers bear predetermined signals, also denoted as pilots, known to both the transmitter and the receiver.

Fig. 2 shows an LTE frame structure containing sub-carriers used for transmitting user data (UD) and control information (CI) as well as sub-carriers with scattered pilots (P) needed for estimating the wireless channel. A more detailed description of this frame structure is given in the 3rd Generation Partnership Project (3GPP) specification TS 36.211, "Evolved Universal Radio Access (E-UTRA); Physical channels and modulation".

In Fig. 1, a suitable data/pilot de-multiplexer (D/P-DMX) 30 separates pilot data from other data and control information. The separated pilot data is supplied to a channel estimator (CHE) 70 which provides channel estimates to the equalizer 40. A subsequent demodulator (DMD) 50 demaps complex output symbols of the equalizer 40 into corresponding bit tuples. At the end of the baseband processing chain, transmission errors may be corrected using an error detection/correction stage or unit 60, such as a turbo or convolutional decoder, to obtain the decoded data (DeD) at the output. In case, the error correction fails, this failure can be detected by utilizing a cyclic redundancy check (CRC).

The performance of the equalizer 40 heavily depends on the accuracy of the channel estimator 70. A two dimensional (2D) Wiener filter delivers an optimal solution at the cost of a higher complexity, as described for example in Hoeher, P. et al., "Two-Dimensional Pilot-Symbol-Aided Channel Estimation by Wiener Filtering," Proc. IEEE International Conference on Acoustics, Speech, and Signal Processing (ICASSP), Munich, Germany, Apr. 1997, pp. 1845-1848. Furthermore, sub-optimal methods have been proposed, where a 2D filter is split into two one dimensional (1D) filtering steps so as to considerably reduce complexity with an insignificant performance loss.

For real time implementation reasons a low complexity solution is needed. Therefore, methods like Recursive Least Square (RLS) algorithms, Kalman filtering, or blind estimation which requires a hardware platform with higher computational power are not adequate.

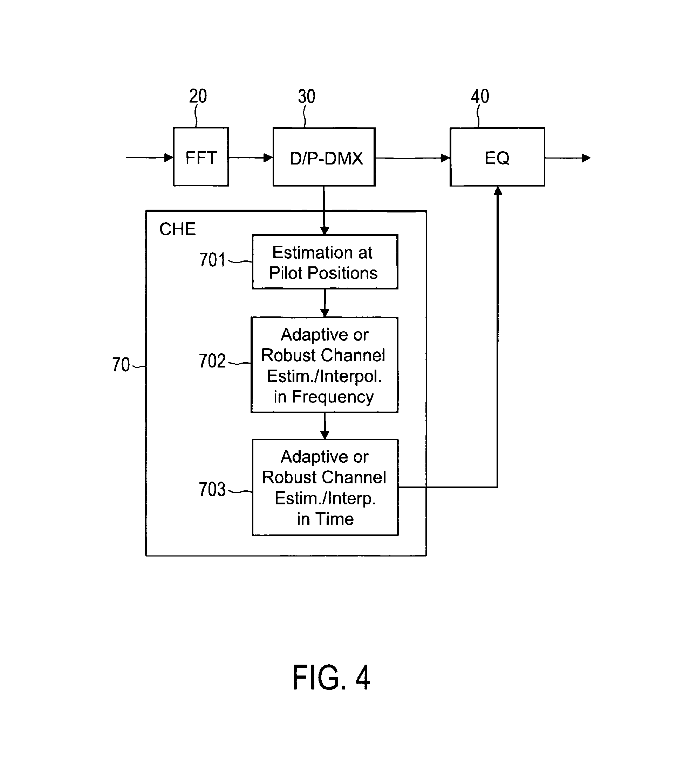

Channel estimation by two 1D Wiener filtering operations has been proposed based on the LTE frame structure of Fig. 2. In LTE, the total data stream is divided into subframes consisting of two slots each of them containing seven OFDM symbols. After estimating all the channel coefficients in the first OFDM symbol the estimation is applied to the other OFDM symbols (e.g. fifth, eighth, and twelfth symbol) which also contain pilots. These estimation steps in frequency direction are then followed by estimation in time direction as can be concluded from Fig. 4 below. The channel estimation in time direction is not considered here in more details since the method presented can easily be adapted to time direction.

The optimal coefficient matrix for estimation/interpolation derived by applying the Wiener approach is constant as long as the channel statistics do not change which is not true in a real environment. Therefore, the coefficient matrix needs to be continuously adapted. Thus, two main obstacles occur which make a direct deployment of the Wiener method difficult. So, the derivation of the optimal coefficient matrix requires firstly, the knowledge of the channel statistics not available in the reality, and secondly, the calculation of a matrix inverse.

There are different methods available to overcome these problems. A broadly used "robust" approach relies on designing a fixed coefficient matrix which is able to cope with the majority of possible channel types. For channel estimation in frequency direction the so called delay spread should be considered. The same is valid for the Doppler spread in time direction. The delay spread is the result of a multipath propagation, whereas the Doppler spread arises from the mobility of a mobile station. Certain assumptions can be made about the delay and the Doppler spread characteristics. Based on these assumptions a suitable coefficient matrix can be found.

Although simple the robust approach has some disadvantages. First of all, the assumptions made often do not match the real propagation conditions. So, the delay profile for instance seldom obeys any predefined distribution. These mismatches cause poor performance of the robust approach. A few refinements might provide considerable improvements. However, broadly used approaches still rely on certain assumptions of the delay and Doppler profiles. Nevertheless, instead of only using one fixed coefficient matrix, a set of different coefficient matrixes can be deployed. The optimization here can be based on channel parameters such as for example maximum Doppler frequency, noise power, and maximum excess delay. These parameters need to be estimated from the received signal. Once the channel parameters have been estimated a predetermined coefficient matrix derived from the stored set can be used which best suits the present conditions. Still, this method relies on some assumptions and mismatches between these assumptions and the reality cause performance degradation.

Schafhuber, D. et al., "Adaptive Wiener Filters for Time-Varying Channel Estimation in Wireless OFDM Systems," Proc. IEEE International Conference on Acoustics, Speech and Signal Processing (ICASSP), Hong Kong, Apr. 2003, Vol. IV, pp. 688-691 describes another approach where the estimated channel coefficients at the pilot positions are converted into the time domain by means of the Inverse Discrete Fourier Transform (IDFT). Then, estimation of the impulse response is improved using an adaptive Normalized Least Mean Square (NLMS) algorithm and channel coefficients estimated in the previous steps. Afterwards, the improved impulse response needs to be converted back into the frequency domain. Despite its promising tracking properties this approach might increase the complexity due to two additional Fourier transforms.

Additionally, US2006/0269016 A1 describes a further approach directly optimizing the estimator/interpolator coefficients. The proposed algorithm relies on adapting interpolator coefficients based on continual pilot cells, that is, on OFDM symbols in frequency direction or sub-carriers in time direction containing pilot symbols only. Exploiting this pilot structure the interpolator can easily be optimized by means of NLMS. It is suggested using demodulated data (decision directed (DD) approach) at the OFDM symbols and sub-carriers with scattered pilots to provide rough channel estimation at those positions. The main advantage of this proposal is that no assumptions of the channel statistics are required. On the other hand, DD methods usually have a poor performance for the lower signal-to-noise ratios (SNRs) due to the decision errors. Furthermore, today's communications systems deploy multiple-input multiple-output (MIMO) techniques thus complicating the DD approach since at the receiver antennas the different signals broadcasted by separate transmit antennas are superimposed. Finally, in many communications systems the adjacent sub-carriers are able to bear differently modulated symbols (quadrature phase shift keying (QPSK), 16-QAM (quadrature amplitude modulation), or 64-QAM for LTE) making the DD method even more complicated.

## SUMMARY

It is an object of the present invention to provide a low complexity adaptive interpolation scheme for channel estimation.

This object is achieved by a method as claimed in claim 1, an apparatus as claimed in claim 9, and a computer program product as claimed in claim 15.

Accordingly, channel estimation is performed at pilot positions of the pilot pattern to obtain first channel estimates. Then, a robust interpolation with predetermined fixed coefficients is used to provide a mismatched interpolation or interpolator for sub-carriers with missing pilot signals to obtain second channel estimates. The first channel estimates are improved by applying adaptive noise suppression at the pilot positions to obtain improved first channel estimates which are used to compensate for mismatches of the second channel estimates. Consequently, interpolator coefficients can be directly optimized based on the channel estimates made at pilot positions and previous interpolation(s) by means of a fixed, robustly designed channel estimation or estimator (e.g. coefficient matrix). Therefore, no assumptions related to channel or noise statistics need to be made.

Furthermore, the drawbacks of a DD approach related to a poor performance in the lower SNR region and MIMO transmission are also avoided. Since LTE and many other standards use orthogonal pilot sequences for different MIMO modes no interferences occur when a channel estimator only relies on these reference symbols. Each link can be treated separately as if a system considered has a plurality of non interfering links.

The proposed solution exhibits a near optimal performance and does not need any a-priori information of the channel statistics. It is applicable to both interpolation in frequency and in time direction or domain. Furthermore, it possesses a high flexibility in terms of scalable complexity. So, the number of pilots used for noise suppression, robust pre-filtering, and adaptive interpolation can be accordingly selected for each of these steps or stages. Thus, a trade-off between complexity and performance can be achieved. Moreover, as the proposed solution relies on transmitted pilots only, it is also applicable to different MIMO modes.

In a more specific exemplary implementation, at least four pilot signals are used for the adaptive noise suppression. This ensures adequate accuracy of the proposed estimation/interpolation.

In the above or another more specific exemplary implementation, the adaptive noise suppression may be repeated for a plurality of adaptation steps. More specifically, the step size of the plurality of adaptation steps may range between 0.005 and 0.02. Thereby, reasonable conversion velocity and stability can be achieved.

The compensation may be performed by using a normalized least mean square filter operation, which inherently leads to a low complexity.

The above apparatus may be implemented as a hardware circuit integrated on a single chip or chip set, or wired on a circuit board. As an alternative, at least parts of the apparatus may be implemented as a software program or routine controlling a processor or computer device. As an example, the software program or routine may be implemented in C type programming language.

Other advantageous modifications are defined in the dependent claims.

## BRIEF DESCRIPTION OF THE DRAWINGS

The invention will now be described in greater detail based on embodiments with reference to the accompanying drawings in which:

Fig. 1 shows a baseband processing chain of a receiver of a multicarrier communications system;

Fig. 2 shows an LTE frame structure containing sub-carriers with scattered pilots needed for channel estimation;

Fig. 3 shows an estimation process in frequency direction using five pilots;

Fig. 4 shows a general block diagram of a channel estimator;

Fig. 5 shows a schematic block or flow diagram of a channel estimator according to a first embodiment;

Fig. 6 shows mean square error curves of different channel estimators for the EPA5 channel model;

Fig. 7 shows mean square error curves of different channel estimators for the ETU70 channel model;

Fig. 8 shows mean square error curves of different channel estimators for the EVA70 channel model; and

Fig. 9 shows a schematic block diagram of software-based implementation according to a second embodiment.

## DESCRIPTION OF THE EMBODIMENTS

In the following, embodiments of the present invention will be described based on an implementation of a baseband processing chain of a receiver for an OFDM system, e.g., an LTE system. This receiver may be provided in an access device (e.g. enhanced Node B (eNB) in LTE terms) or a terminal device (e.g. user equipment (UE) in LTE terms). However, it is to be noted that the present invention can be applied in various other types of transmission networks with pilot patterns.

In the following embodiments, interpolator coefficients for channel estimation are directly optimized based on channel estimates obtained at pilot positions and previous interpolation by means of a fixed, robustly designed coefficient matrix $\mathbf{W}^f$. The letter "$f$" emphasizes the estimation in frequency direction. For the further discussion the labels $f$ (frequency) and $t$ (time) are skipped, as the proposed estimation can be applied to both frequency and time direction or domain.

Since LTE uses orthogonal pilot sequences as pilots or pilot signals for different MIMO modes no interferences occur when the channel estimation only relies on these pilot sequences as reference symbols. Each link can be treated separately as if the transmission system had a plurality of non interfering links. The system configuration used for performance evaluation occupies a bandwidth of 10 MHz. The FFT length amounts to 1024 where the central 600 sub-carriers are deployed for data transmission only. The remaining 1024 - 600 = 424 sub-carriers are not used. The distance $\Delta f$ of two consecutive sub-carriers is equal to 15 kHz. The transmission of one subframe consisting of 14 OFDM symbols takes 1 ms. In this example it is assumed that the estimation and interpolation in frequency direction is done first using $Np$ = 5 noisy pilot sub-carriers followed by the estimation in time direction as depicted in Fig. 4 below.

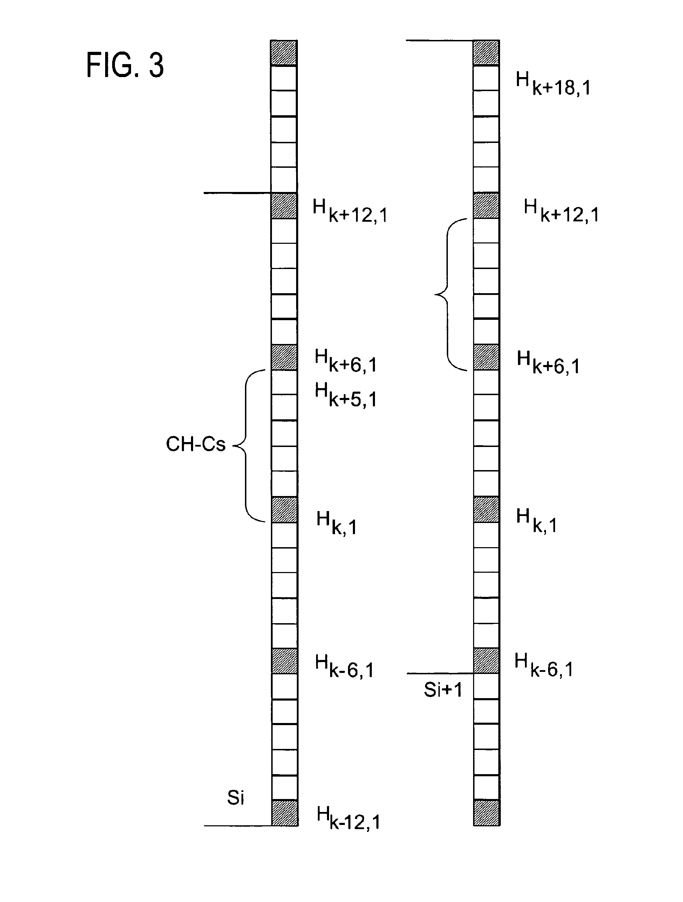

Fig. 3 exemplifies the robust estimation process in frequency direction using five pilots. The first OFDM symbol of a subframe is separately shown. In step Si the channel coefficients ranging from sub-carrier $k$ to $k + 5$ are estimated (interpolated at sub-carriers where the pilots are missing) exploiting the noisy channel coefficients $H_{k-12,1}$, $H_{k-6,1}$, $H_{k,1}$, $H_{k+6,1}$, and $H_{k+12,1}$, where the index "1" stands for the first OFDM symbol. The channel coefficients (CH-Cs) to be estimated are combined in a vector as follows:

$$\hat{\mathbf{h}}_k = \begin{pmatrix} \hat{H}_{k,1} \\ \hat{H}_{k+1,1} \\ \vdots \\ \hat{H}_{k+5,1} \end{pmatrix}, \tag{1}$$

whereas the pilots used are composed to a vector as follows:

$$\overline{\mathbf{h}}_k = \begin{pmatrix} \overline{H}_{k-12,1} \\ \overline{H}_{k-6,1} \\ \vdots \\ \overline{H}_{k+12,1} \end{pmatrix}. \tag{2}$$

So, for interpolating the channel at the positions from $k$ to $k + 5$, estimated values at pilot sub-carriers from $\overline{H}_{k-12,1}$ to $\overline{H}_{k+12,1}$ are used. These values at pilot sub-carriers can be derived from the received signal $r_{k,n}$ according to:

$$\overline{H}_{k,1} = r_{k,1}\big/P_{k,1}, \tag{3}$$

where $P_{k,1}$ is a scattered pilot at the subcarrier $k$ of the first OFDM symbol. Afterwards, a robust interpolator with a fixed matrix **W** provides a mismatched estimation/interpolation for the pilot sub-carriers as well as for the sub-carriers with missing pilots. Taking the previous example in Fig. 3 with 5 pilots leads to:

$$\begin{pmatrix} \hat{H}_{k,1} \\ \hat{H}_{k+1,1} \\ \vdots \\ \hat{H}_{k+5,1} \end{pmatrix} = \begin{pmatrix} w_{0,0} & w_{0,1} & \cdots & w_{0,4} \\ w_{1,0} & \ddots & & \vdots \\ \vdots & & \ddots & \\ w_{5,0} & \cdots & & w_{5,4} \end{pmatrix} \cdot \begin{pmatrix} \overline{H}_{k-12,1} \\ \overline{H}_{k-6,1} \\ \vdots \\ \overline{H}_{k+12,1} \end{pmatrix} \Rightarrow \hat{\mathbf{h}}_k = \mathbf{W}\overline{\mathbf{h}}_k \; , \qquad (4)$$

where

$$\mathbf{W} = \mathbf{R}_{\mathbf{h}\mathbf{h}_p} \left( \mathbf{R}_{\mathbf{h}_p \mathbf{h}_p} \right)^{-1} . \qquad (5)$$

Here, $\mathbf{R}_{\mathbf{h}\mathbf{h}_p}$ is the cross-correlation matrix between the channel coefficients to be interpolated and the channel coefficients at the pilot positions used for this interpolation. Consequentially, $\mathbf{R}_{\mathbf{h}\mathbf{h}_p}$ is the autocorrelation matrix of those channel coefficients at the pilot positions. The coefficient matrix **W** is designed to be "robust" assuming a certain delay spread profile. Two common delay profiles used are the exponential and rectangular as can be found in Schulze, H. et al., "Theory and Applications of OFDM and CDMA Wideband Wireless Communications," John Wiley & Sons, 2005, p. 189. In case of the second profile it is assumed that the multipath components are uniformly distributed between 0 and $\tau_{\max}$ seconds. The CP duration of the LTE configuration with the structure in Fig. 2 is about 5 $\mu$s, that is, channels which do not exceed this duration can be efficiently equalized. Therefore, $\tau_{\max}$ can be set to 5$\mu$s here. For the estimation and interpolation in time direction similar assumptions are made related to the Doppler spread. Altogether, the cross-correlation and the autocorrelation matrixes can be stated as:

$$\mathbf{R}_{\mathbf{h}\mathbf{h}_p} =$$
$$\begin{pmatrix} e^{-j\pi 12\Delta f\tau_{\max}} \cdot si(12\Delta f\tau_{\max}) & e^{-j\pi 6\Delta f\tau_{\max}} \cdot si(6\Delta f\tau_{\max}) & \cdots & e^{j\pi 12\Delta f\tau_{\max}} \cdot si(-12\Delta f\tau_{\max}) \\ \vdots & & \ddots & e^{j\pi 11\Delta f\tau_{\max}} \cdot si(-11\Delta f\tau_{\max}) \\ e^{-j\pi 16\Delta f\tau_{\max}} \cdot si(16\Delta f\tau_{\max}) & & & \vdots \\ e^{-j\pi 17\Delta f\tau_{\max}} \cdot si(17\Delta f\tau_{\max}) & & \cdots & e^{j\pi 7\Delta f\tau_{\max}} \cdot si(-7\Delta f\tau_{\max}) \end{pmatrix} \quad (6)$$

and

$$\mathbf{R}_{h_P h_P} =$$

$$\begin{pmatrix} e^{-j0} \cdot si(0\Delta f\tau_{\max})+\sigma_n^2 & e^{-j\pi 6\Delta f\tau_{\max}} \cdot si(6\Delta f\tau_{\max}) & \cdots & e^{-j\pi 24\Delta f\tau_{\max}} \cdot si(24\Delta f\tau_{\max}) \\ \vdots & \ddots & & e^{-j\pi 18\Delta f\tau_{\max}} \cdot si(18\Delta f\tau_{\max}) \\ e^{j\pi 18\Delta f\tau_{\max}} \cdot si(-18\Delta f\tau_{\max}) & & & \vdots \\ e^{j\pi 24\Delta f\tau_{\max}} \cdot si(-24\Delta f\tau_{\max}) & & \cdots & e^{-j0} \cdot si(0\Delta f\tau_{\max})+\sigma_n^2 \end{pmatrix} \quad (7)$$

where $\Delta f$= 15 kHz and $\sigma_n^2$ is the noise power which, for the further considerations, can be replaced by a small constant.

A detailed derivation of these matrixes is given in Schulze, H. et al., "Theory and Applications of OFDM and CDMA Wideband Wireless Communications," John Wiley & Sons, 2005, pp. 186-192. Once the channel at the positions from $k$ to $k + 5$ has been calculated, the whole procedure is repeated for the sub-carriers $k + 6$ to $k +11$ as shown in Fig. 3 for the step $Si+1$. After estimating the channel coefficient in the first OFDM symbol the same approach is applied to the OFDM symbols 5, 8, and 12.

Fig. 4 shows a general block diagram of the channel estimator 70 of the baseband processing chain of Fig. 1. After demultiplexing the data stream and pilots in the data/pilot demultiplexer 30, the pilots are supplied to a first stage 701 of estimation at pilot positions. Then, in a second stage 702 either a fixed or adaptive channel estimation and interpolation is performed for frequency direction or domain. Finally, in a third stage 703, channel estimation and interpolation is completed for the time direction or domain. If needed the order of the frequency and time direction estimation in the respective stages 702 and 703 can be swapped. The estimation and interpolation results are supplied to the equalizer 40 of the baseband processing chain.

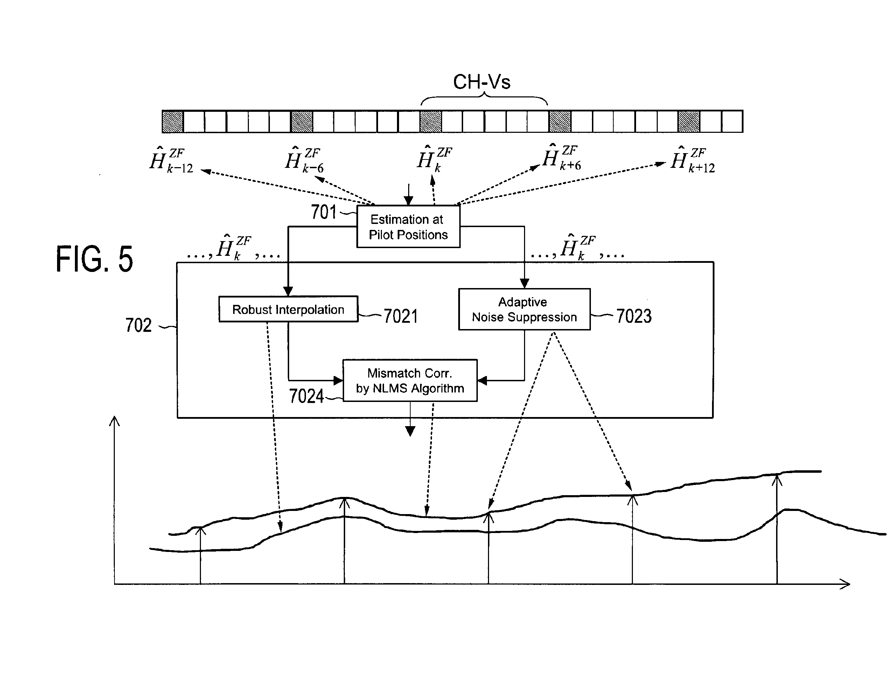

Fig. 5 shows a more detailed structure of the proposed adaptive channel interpolation process in stages 702 and 703 of Fig. 4 for estimating and interpolating channel values (CH-Vs). At the beginning, the channel coefficients at the pilot positions are estimated in stage 701 from the received signal $r_{k,n}$, as stated in Eq. 3. Then, a robust interpolator or interpolation stage 7021 with a predetermined fixed coefficient matrix $\mathbf{W}$ provides a mismatched interpolation for the sub-carriers with missing pilots as described by Eq. 4. Similarly, the interpolation of the channel parameters for the sub-carriers $k + 6$ to $k + 11$ yields:

$$\begin{pmatrix} \hat{H}_{k+6,1} \\ \hat{H}_{k+7,1} \\ \vdots \\ \hat{H}_{k+11,1} \end{pmatrix} = \begin{pmatrix} w_{0,0} & w_{0,1} & \cdots & w_{0,4} \\ w_{1,0} & \ddots & & \vdots \\ \vdots & & \ddots & \\ w_{5,0} & \cdots & & w_{5,4} \end{pmatrix} \cdot \begin{pmatrix} \overline{H}_{k-6,1} \\ \overline{H}_{k,1} \\ \vdots \\ \overline{H}_{k+18,1} \end{pmatrix} \Rightarrow \hat{\mathbf{h}}_{k+6} = \mathbf{W}\overline{\mathbf{h}}_{k+6} \quad (8)$$

The accuracy of the channel estimation at a pilot position heavily affects the performance of the whole method. Therefore, in parallel an adaptive noise suppression takes place in a noise suppression stage 7023 to improve estimates $\overline{H}_{k,1}$. In this example, four adjacent pilots are used for the sake of simplicity. In general, it is recommended to exploit more pilots as it will improve the accuracy. In the adaptation step $i$ the noise suppression for the coefficient $\overline{H}_{k,1}$ leads to:

$$\breve{H}_{k,1} = \begin{pmatrix} c_0^i & c_1^i & c_2^i & c_3^i \end{pmatrix} \cdot \begin{pmatrix} \overline{H}_{k-12,1} \\ \overline{H}_{k-6,1} \\ \overline{H}_{k+6,1} \\ \overline{H}_{k+12,1} \end{pmatrix} \tag{9}$$

Then, before continuing with the step $i+1$ the coefficient vector **c** is updated in the following manner:

$$\begin{pmatrix} c_0^{i+1} \\ c_1^{i+1} \\ c_2^{i+1} \\ c_3^{i+1} \end{pmatrix} = \begin{pmatrix} c_0^i \\ c_1^i \\ c_2^i \\ c_3^i \end{pmatrix} - \frac{\mu}{\left\| \mathbf{H} \right\|^i} \begin{pmatrix} \overline{H}_{k-12,1}^* \\ \overline{H}_{k-6,1}^* \\ \overline{H}_{k+6,1}^* \\ \overline{H}_{k+12,1}^* \end{pmatrix} \cdot e^i \tag{10}$$

with

$$\left\| \mathbf{H} \right\|^i = \begin{pmatrix} \overline{H}_{k-12,1}^* & \overline{H}_{k-6,1}^* & \overline{H}_{k+6,1}^* & \overline{H}_{k+12,1}^* \end{pmatrix} \cdot \begin{pmatrix} \overline{H}_{k-12,1} \\ \overline{H}_{k-6,1} \\ \overline{H}_{k+6,1} \\ \overline{H}_{k+12,1} \end{pmatrix} \tag{11}$$

and

$$e^i = \begin{pmatrix} c_0^i & c_1^i & c_2^i & c_3^i \end{pmatrix} \cdot \begin{pmatrix} \overline{H}_{k-12,1} \\ \overline{H}_{k-6,1} \\ \overline{H}_{k+6,1} \\ \overline{H}_{k+12,1} \end{pmatrix} - \overline{H}_{k,1} \tag{12}$$

The vector $\mathbf{c}^0 = \begin{pmatrix} c_0^0 & c_1^0 & c_2^0 & c_3^0 \end{pmatrix}^T$ can be initialized with any values (for instance with "0"s) at the beginning (step $i = 0$). The step size $\mu$ has an influence on the convergence velocity and stability of the algorithm. For a stable operation $0 < \mu < 2$ is required. Simulations proved that $\mu$ ranging from 0.005 to 0.02 provides reasonable results. After updating **c** next improvement takes place:

$$\breve{H}_{k+6,1} = \begin{pmatrix} c_0^{i+1} & c_1^{i+1} & c_2^{i+1} & c_3^{i+1} \end{pmatrix} \cdot \begin{pmatrix} \overline{H}_{k-6,1} \\ \overline{H}_{k,1} \\ \overline{H}_{k+12,1} \\ \overline{H}_{k+18,1} \end{pmatrix} . \qquad (13)$$

The procedure is repeated for the adaptation steps $i+2$, $i+3$, and so on. The improved estimates ... $\overline{H}_{k-6,1}$, $H_{k,1}$, $\overline{H}_{k+6,1}$, are then used to compensate in a compensation stage 7024 for the mismatches as a result of pre-filtering with the robust interpolator 7021, as shown in Fig. 5. In step $i$ the correction is executed by filtering the robustly interpolated values as shown below:

$$\widetilde{H}_{k,1} = \begin{pmatrix} b_0^i & b_1^i & b_2^i & b_3^i & b_4^i \end{pmatrix} \cdot \begin{pmatrix} \hat{H}_{k-14,1} \\ \hat{H}_{k-8,1} \\ \hat{H}_{k-2,1} \\ \hat{H}_{k+4,1} \\ \hat{H}_{k+10,1} \end{pmatrix},$$

$$\widetilde{H}_{k+1,1} = \begin{pmatrix} b_0^i & b_1^i & b_2^i & b_3^i & b_4^i \end{pmatrix} \cdot \begin{pmatrix} \hat{H}_{k-13,1} \\ \hat{H}_{k-7,1} \\ \hat{H}_{k-1,1} \\ \hat{H}_{k+5,1} \\ \hat{H}_{k+11,1} \end{pmatrix}, \qquad (14)$$

$$\vdots$$

$$\widetilde{H}_{k+5,1} = \begin{pmatrix} b_0^i & b_1^i & b_2^i & b_3^i & b_4^i \end{pmatrix} \cdot \begin{pmatrix} \hat{H}_{k-9,1} \\ \hat{H}_{k-3,1} \\ \hat{H}_{k+3,1} \\ \hat{H}_{k+9,1} \\ \hat{H}_{k+15,1} \end{pmatrix} .$$

Again, for the sake of simplicity the length of the vector **b** of 5 was arbitrarily chosen. For the next interpolation step this coefficient vector is updated as follows:

$$
\begin{pmatrix} b_0^{i+1} \\ b_1^{i+1} \\ \vdots \\ b_4^{i+1} \end{pmatrix} = \begin{pmatrix} b_0^i \\ b_1^i \\ \vdots \\ b_4^i \end{pmatrix} - \frac{\mu}{\left\| \hat{\mathbf{H}} \right\|^i} \begin{pmatrix} \hat{H}_{k-8,1}^* \\ \hat{H}_{k-2,1}^* \\ \hat{H}_{k+4,1}^* \\ \hat{H}_{k+10,1}^* \\ \hat{H}_{k+16,1}^* \end{pmatrix} \cdot v^i \tag{15}
$$

with

$$
\left\| \hat{\mathbf{H}} \right\|^i = \begin{pmatrix} \hat{H}_{k-8,1}^* & \hat{H}_{k-2,1}^* & \hat{H}_{k+4,1}^* & \hat{H}_{k+10,1}^* & \hat{H}_{k+16,1}^* \end{pmatrix} \cdot \begin{pmatrix} \hat{H}_{k-8,1} \\ \hat{H}_{k-2,1} \\ \hat{H}_{k+4,1} \\ \hat{H}_{k+10,1} \\ \hat{H}_{k+16,1} \end{pmatrix} \tag{16}
$$

and

$$
v^i = \begin{pmatrix} b_0^i & b_1^i & b_2^i & b_3^i & b_4^i \end{pmatrix} \cdot \begin{pmatrix} \hat{H}_{k-8,1} \\ \hat{H}_{k-2,1} \\ \hat{H}_{k+4,1} \\ \hat{H}_{k+10,1} \\ \hat{H}_{k+16,1} \end{pmatrix} - \breve{H}_{k+6,1} . \tag{17}
$$

As can be concluded from Eq. 17 the improved estimates ... $\overline{H}_{k-6,1}$, $\overline{H}_{k,1}$, $\overline{H}_{k+6,1}$, ... are used to enable the interpolator b to properly compensate for mismatches in robustly interpolated ... $\hat{H}_{k-1,1}$, $\hat{H}_{k,1}$, $\hat{H}_{k+1,1}$, and so on. At the beginning ($i = 0$) the vector $\mathbf{b}^0$ can be initialized by any value. After updating $\mathbf{b}$ the next set of the channel coefficients is found:

$$
\widetilde{H}_{k+6,1} = \begin{pmatrix} b_0^{i+1} & b_1^{i+1} & b_2^{i+1} & b_3^{i+1} & b_4^{i+1} \end{pmatrix} \cdot \begin{pmatrix} \hat{H}_{k-8,1} \\ \hat{H}_{k-2,1} \\ \hat{H}_{k+4,1} \\ \hat{H}_{k+10,1} \\ \hat{H}_{k+16,1} \end{pmatrix},
$$

$$
\widetilde{H}_{k+7,1} = \begin{pmatrix} b_0^{i+1} & b_1^{i+1} & b_2^{i+1} & b_3^{i+1} & b_4^{i+1} \end{pmatrix} \cdot \begin{pmatrix} \hat{H}_{k-7,1} \\ \hat{H}_{k-1,1} \\ \hat{H}_{k+5,1} \\ \hat{H}_{k+11,1} \\ \hat{H}_{k+17,1} \end{pmatrix},
$$

$$
\vdots
$$

$$
\widetilde{H}_{k+11,1} = \begin{pmatrix} b_0^{i+1} & b_1^{i+1} & b_2^{i+1} & b_3^{i+1} & b_4^{i+1} \end{pmatrix} \cdot \begin{pmatrix} \hat{H}_{k-3,1} \\ \hat{H}_{k+3,1} \\ \hat{H}_{k+9,1} \\ \hat{H}_{k+15,1} \\ \hat{H}_{k+21,1} \end{pmatrix}.
$$

(18)

For better understanding the next adaption step is also exemplified:

$$
\begin{pmatrix} b_0^{i+2} \\ b_1^{i+2} \\ \vdots \\ b_4^{i+2} \end{pmatrix} = \begin{pmatrix} b_0^{i+1} \\ b_1^{i+1} \\ \vdots \\ b_4^{i+1} \end{pmatrix} - \frac{\mu}{\left\| \hat{\mathbf{H}} \right\|^{i+1}} \begin{pmatrix} \hat{H}_{k-2,1}^* \\ \hat{H}_{k+4,1}^* \\ \hat{H}_{k+10,1}^* \\ \hat{H}_{k+16,1}^* \\ \hat{H}_{k+22,1}^* \end{pmatrix} \cdot v^{i+1},
$$

(19)

where

$$
\left\| \hat{\mathbf{H}} \right\|^{i+1} = \begin{pmatrix} \hat{H}_{k-2,1}^* & \hat{H}_{k+4,1}^* & \hat{H}_{k+10,1}^* & \hat{H}_{k+16,1}^* & \hat{H}_{k+22,1}^* \end{pmatrix} \cdot \begin{pmatrix} \hat{H}_{k-2,1} \\ \hat{H}_{k+4,1} \\ \hat{H}_{k+10,1} \\ \hat{H}_{k+16,1} \\ \hat{H}_{k+22,1} \end{pmatrix}
$$

(20)

and

$$v^{i+1} = \begin{pmatrix} b_0^{i+1} & b_1^{i+1} & b_2^{i+1} & b_3^{i+1} & b_4^{i+1} \end{pmatrix} \cdot \begin{pmatrix} \hat{H}_{k-2,1} \\ \hat{H}_{k+4,1} \\ \hat{H}_{k+10,1} \\ \hat{H}_{k+16,1} \\ \hat{H}_{k+22,1} \end{pmatrix} - \breve{H}_{k+12,1} \qquad (21)$$

As soon as the interpolation of the first OFDM symbol has been completed the same procedure is applied to the symbols 5, 8, and 12.

Finally, the interpolation in time direction is performed in a similar manner, as shown in Fig. 4. The adaptive method discussed here can be easily modified and utilized for the time direction interpolation. Therefore, this modification is not considered here in more detail.

In the following, the disclosed method is evaluated using three different channel models summarized in the table below. They are also used for conformance testing of LTE systems in the 3GPP specification TS 36.101 "Evolved Universal Radio Access (E-UTRA); User Equipment (UE) radio transmission and reception".

| EPA5 (Extended Pedestrian A) $f_{Dmax}$ = 5 Hz (Jakes Dopp. Spread) | | EVA70 (Extended Vehicular A) $f_{Dmax}$ = 70 Hz (Jakes Dopp. Spread) | | ETU70 (Extended Typical Urban) $f_{Dmax}$ = 70 Hz (Jakes Dopp. Spread) | |
|---|---|---|---|---|---|
| Excess tap delay [ns] | Relative power [dB] | Excess tap delay [ns] | Relative power [dB] | Excess tap delay [ns] | Relative power [dB] |
| 0 | 0.0 | 0 | 0.0 | 0 | -1.0 |
| 30 | -1.0 | 30 | -1.5 | 50 | -1.0 |
| 70 | -2.0 | 150 | -1.4 | 120 | -1.0 |
| 90 | -3.0 | 310 | -3.6 | 200 | 0.0 |
| 110 | -8.0 | 370 | -0.6 | 230 | 0.0 |
| 190 | -17.2 | 710 | -9.1 | 500 | 0.0 |
| 410 | -20.8 | 1090 | -7.0 | 1600 | -3.0 |
| | | 1730 | -12.0 | 2300 | -5.0 |
| | | 2510 | -16.9 | 5000 | -7.0 |

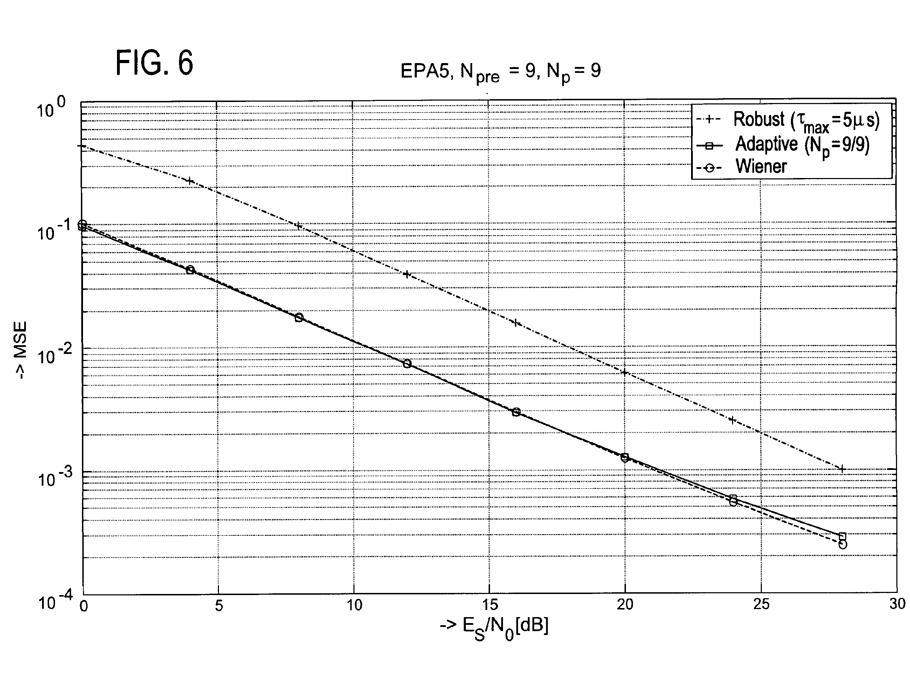

Fig. 6 shows mean square error (MSE) curves over SNR of the robust estimator with $\tau_{max}$ = 5 $\mu$s, the optimal Wiener, and the proposed adaptive estimator in frequency direction according to the present embodiments for the EPA5 channel model. Thus, the OFDM symbols 1, 5, 8, and 12 are considered. The number $N_{pre}$ of pilots used for the robust and Wiener interpolation was set to 9. The same length was taken for the adaptive approach ($N_p = N_{pre}$) of the present embodiments. The label 9/9 within the legend stands for the robust pre-filtering with $N_{pre}$ = 9 (first number) and the adaptive post-processing with $N_p$ = 9 (second number). For noise suppression 8 adjacent pilots are used (4 left and 4 right pilots).The estimation at the edges is not considered here. The channel estimation procedures discussed so far can also be extended to cover the edge scenario. From Fig. 6 it is obvious that the Wiener and the adaptive interpolator performances provide similar results up to an SNR of about 24 dB.

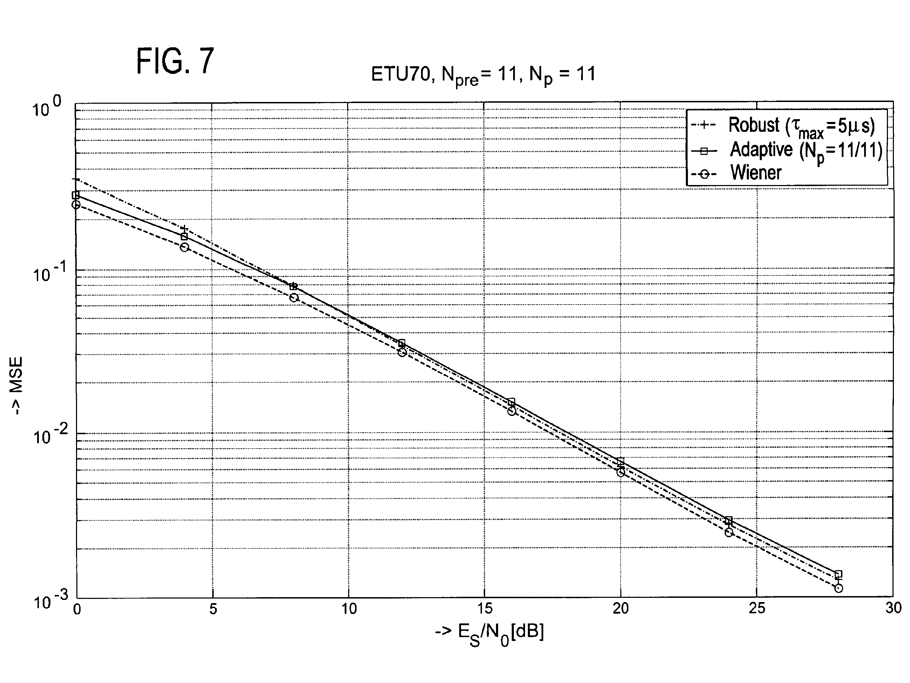

Fig. 7 shows MSE curves over SNR for the ETU70 channel model using $N_p = N_{pre}$ = 11 and 10 pilots to suppress the noise. The robust approach seems to match well the channel statistics in this case. Nevertheless, the adaptive interpolator according to the present embodiments outperforms the fixed robust filtering up to a SNR of 8 dB.

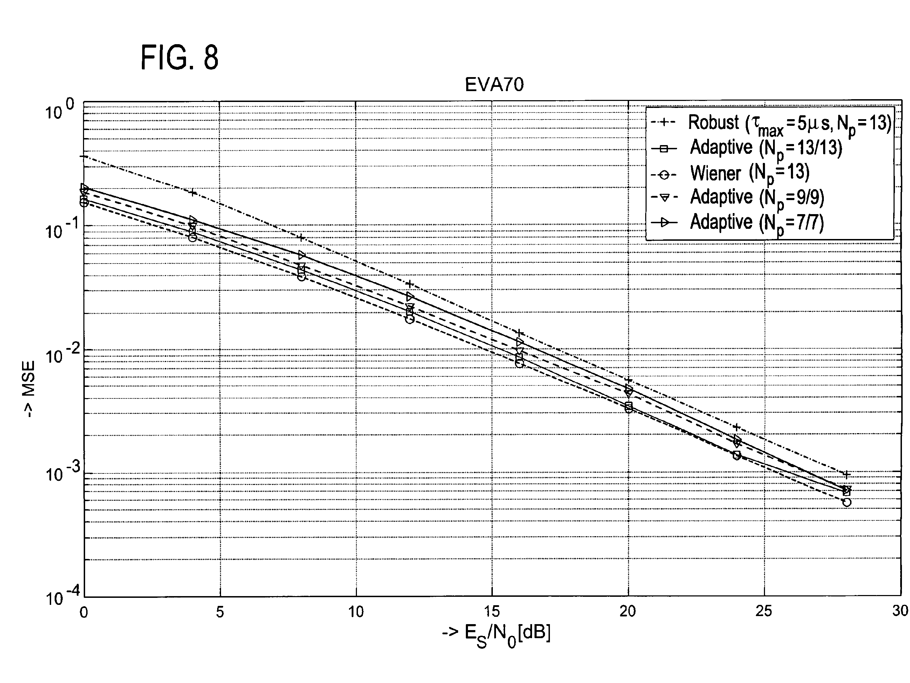

Fig. 8 shows MSE curves over SNR for the EVA70 channel model. The robust and Wiener interpolator deploy 13 pilots. In terms of filtering, the configuration of $N_{pre}$ = 7 and $N_p$ = 7 ( = 7/7) with 6 pilots to suppress the noise for the adaptive approach has a comparable complexity. From Fig. 8 it is obvious that this configuration has a reasonable performance but it also has some performance degradation compared to the 13/13 case. The use of more than only 6 adjacent pilots for the noise suppression purposes will further improve the accuracy of the 7/7 configuration at the costs of an insignificantly higher complexity.

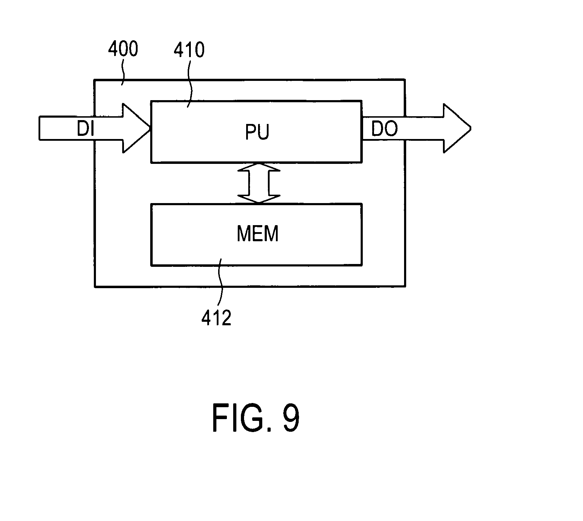

Fig. 9 shows a schematic block diagram of an alternative software-based implementation according to a second embodiment. The required functionalities can be implemented in a baseband processing chain 400 of a receiver with a processing unit 410, which may be any processor or computer device with a control unit which performs control based on software routines of a control program stored in a memory 412. The control program may also be stored separately on a computer- readable medium. Program code instructions are fetched from the memory 412 and are loaded to the control unit of the processing unit 410 in order to perform the processing steps of Fig. 5, which may be implemented as the above mentioned software routines. The processing steps may be performed on the basis of input data DI and may generate output data DO. The input data DI may correspond to the received signal with pilot pattern and the output data DO may channel estimates.

Consequently, the functionalities of the above embodiments may be implemented as a computer program product comprising code means for generating each individual step of the frame alignment procedure when run on a computer device or data processor of the respective entity.

The channel estimation or interpolation of the above embodiments can easily be extended to an interpolation in time direction.

In summary, a method and apparatus for channel estimation in a multi-carrier transmission system involving pilot patterns has been described. Channel estimation is performed at pilot positions of the pilot pattern to obtain first channel estimates. Then, a robust interpolation with predetermined fixed coefficients is used to provide a mismatched interpolation for sub-carriers with missing pilot signals to obtain second channel estimates. The first channel estimates are improved by applying adaptive noise suppression at the pilot positions to obtain improved first channel estimates which are used for compensation of mismatches of the second channel estimates.

It is apparent that the invention can easily be extended to any access and/or terminal device and system and is not restricted to LTE networks. The proposed embodiments can be implemented in connection with any terminal device, base station or access device deployed in any cellular or wireless network. The embodiments may thus vary within the scope of the attached claims.

**Claims**

1. A method of channel estimation in a multi-carrier transmission system where a transmission signal is divided into a plurality of data streams transmitted using different sub-carriers and including a pilot pattern scattered in time and frequency domain, said method comprising:

    a. performing channel estimation at pilot positions of said pilot pattern to obtain first channel estimates;
    b. using a robust interpolation with predetermined fixed coefficients to provide a mismatched interpolation for sub-carriers with missing pilot signals to obtain second channel estimates;
    c. improving said first channel estimates by applying an adaptive noise suppression at said pilot positions to obtain improved first channel estimates; and
    d. using said improved first channel estimates to compensate for mismatches of said second channel estimates.

2. The method according to claim 1, wherein said channel estimation and robust interpolation are applied in the time domain.

3. The method according to claim 1 or 2, wherein said channel estimation and robust interpolation are applied in the frequency domain.

4. The method according to any one of the preceding claims, wherein said transmission system is an orthogonal frequency division multiplexing system.

5. The method according to any one of the preceding claims, wherein at least four pilot signals are used for said adaptive noise suppression.

6. The method according to any one of the preceding claims, wherein said adaptive noise suppression is repeated for a plurality of adaptation steps.

7. The method according to claim 6, wherein a step size of said plurality of adaptation steps ranges between 0.005 and 0.02.

8. The method according to any one of the preceding claims, wherein said compensation is performed by using a normalized least mean square filter operation.

9. An apparatus for performing channel estimation for a multi-carrier transmission signal which is divided into a plurality of data streams transmitted using different sub-carriers and including a pilot pattern scattered in time and frequency domain, said apparatus comprising:

   a. channel estimation means (701) for performing channel estimation at pilot positions of said pilot pattern to obtain first channel estimates;
   b. interpolation means (7021) for using a robust interpolation with predetermined fixed coefficients to provide a mismatched interpolation for sub-carriers with missing pilot signals to obtain second channel estimates;
   c. noise suppressing means (7023) for improving said first channel estimates by applying an adaptive noise suppression at said pilot positions to obtain improved first channel estimates; and
   d. compensation means (7024) for using said improved first channel estimates to compensate for mismatches of said second channel estimates.

10. The apparatus according to claim 9, wherein said noise suppressing means (7023) is adapted to use at least four pilot signals for said adaptive noise suppression.

11. The apparatus according to claim 9 or 10, wherein said noise suppressing means (7023) is adapted to repeat said adaptive noise suppression for a plurality of adaptation steps.

12. The apparatus according to any one of claims 9 to 11, wherein said compensation means (7024) comprises a normalized least mean square filter.

13. A network access device comprising an apparatus according to any one of claims 9 to 12.

14. A terminal device comprising an apparatus according to any one of claims 9 to 12.

15. A computer program product comprising code means for producing the steps of method claim 1 when run on a computer device.

**Amended claims in accordance with Rule 137(2) EPC.**

1. A method of channel estimation in a multi-carrier transmission system where a transmission signal is divided into a plurality of data streams transmitted using different sub-carriers and including a pilot pattern scattered in time and frequency domain, said method comprising:

   a. performing channel estimation at pilot positions of said pilot pattern to obtain first channel estimates;
   b. using a robust interpolation with predetermined fixed filter coefficients to provide a mismatched interpolation for sub-carriers with missing pilot signals to obtain second channel estimates;
   c. improving said first channel estimates by applying an adaptive noise suppression at said pilot positions to obtain improved first channel estimates; and
   d. using said improved first channel estimates as a reference for adapting filter coefficients to be used to compensate for mismatches of said second channel estimates.

2. The method according to claim 1, wherein said channel estimation and robust interpolation are applied in the time domain.

3. The method according to claim 1 or 2, wherein said channel estimation and robust interpolation are applied in the frequency domain.

4. The method according to any one of the preceding claims, wherein said transmission system is an orthogonal frequency division multiplexing system.

5. The method according to any one of the preceding claims, wherein at least four pilot signals are used for said adaptive noise suppression.

**6.** The method according to any one of the preceding claims, wherein said adaptive noise suppression is repeated for a plurality of adaptation steps.

**7.** The method according to claim 6, wherein a step size of said plurality of adaptation steps ranges between 0.005 and 0.02.

**8.** The method according to any one of the preceding claims, wherein said compensation is performed by using a normalized least mean square filter operation.

**9.** An apparatus for performing channel estimation for a multi-carrier transmission signal which is divided into a plurality of data streams transmitted using different sub-carriers and including a pilot pattern scattered in time and frequency domain, said apparatus comprising:

a. channel estimation means (701) for performing channel estimation at pilot positions of said pilot pattern to obtain first channel estimates;
b. interpolation means (7021) for using a robust interpolation with predetermined fixed filter coefficients to provide a mismatched interpolation for sub-carriers with missing pilot signals to obtain second channel estimates;
c. noise suppressing means (7023) for improving said first channel estimates by applying an adaptive noise suppression at said pilot positions to obtain improved first channel estimates; and
d. compensation means (7024) for using said improved first channel estimates as a reference for adapting filter coefficients to be used to compensate for mismatches of said second channel estimates.

**10.** The apparatus according to claim 9, wherein said noise suppressing means (7023) is adapted to use at least four pilot signals for said adaptive noise suppression.

**11.** The apparatus according to claim 9 or 10, wherein said noise suppressing means (7023) is adapted to repeat said adaptive noise suppression for a plurality of adaptation steps.

**12.** The apparatus according to any one of claims 9 to 11, wherein said compensation means (7024) comprises a normalized least mean square filter.

**13.** A network access device comprising an apparatus according to any one of claims 9 to 12.

**14.** A terminal device comprising an apparatus according to any one of claims 9 to 12.

**15.** A computer program product comprising code means for producing the steps of method claim 1 when run on a computer device.

# FIG. 1

# FIG. 2

FIG. 3

$H_{k+18,1}$

$H_{k+12,1}$

$H_{k+12,1}$

$H_{k+6,1}$

$H_{k+6,1}$

$H_{k+5,1}$

CH-Cs

$H_{k,1}$

$H_{k,1}$

$H_{k-6,1}$

$H_{k-6,1}$

Si+1

Si

$H_{k-12,1}$

20    30    40

FFT → D/P-DMX → EQ →

CHE

701 — Estimation at Pilot Positions

702 — Adaptive or Robust Channel Estim./Interpol. in Frequency

70

703 — Adaptive or Robust Channel Estim./Interp. in Time

FIG. 4

FIG. 5

FIG. 6

EPA5, $N_{pre} = 9$, $N_p = 9$

Legend:
- -+- Robust ($\tau_{max} = 5\mu s$)
- -□- Adaptive ($N_p = 9/9$)
- -○- Wiener

-> MSE

-> $E_S/N_0$ [dB]

FIG. 7

ETU70, $N_{pre}=11$, $N_p=11$

Legend: Robust ($\tau_{max}=5\mu s$); Adaptive ($N_p=11/11$); Wiener

$\to E_S/N_0$ [dB]

$\to$ MSE

## FIG. 8

EP 2 479 946 A1

EVA70

Legend:
- Robust ($\tau_{max}=5\mu s$, $N_p=13$)
- Adaptive ($N_p=13/13$)
- Wiener ($N_p=13$)
- Adaptive ($N_p=9/9$)
- Adaptive ($N_p=7/7$)

Y-axis: -> MSE

X-axis: -> $E_S/N_0$[dB]

400    410

DI → PU → DO

MEM

412

# FIG. 9

**Europäisches Patentamt**
**European Patent Office**
**Office européen des brevets**

# EUROPEAN SEARCH REPORT

Application Number

EP 11 00 0396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDREAS IBING ET AL: "MMSE channel estimation and time synchronization tracking for cooperative MIMO-OFDM with propagation delay differences", WIRELESS COMMUNICATION SYSTEMS. 2008. ISWCS '08. IEEE INTERNATIONAL SYMPOSIUM ON, IEEE, PISCATAWAY, NJ, USA, 21 October 2008 (2008-10-21), pages 433-437, XP031380374, ISBN: 978-1-4244-2488-7 * page 435 - page 437 * ----- | 1-15 | INV. H04L25/02 |
| A | Peter Hoeher ET AL: "Pilot-Symbol-Aided Channel Estimation in Time and Frequency", Proc. IEEE Global Telecommunications Conference (GLOBECOM '97), Communication Theory Mini-Conference, 1 January 1997 (1997-01-01), pages 90-96, XP55005421, [retrieved on 2011-08-23] * Section 4.4; page 4 - page 5 * ----- | 1-15 | |
| | | | **TECHNICAL FIELDS SEARCHED (IPC)** |
| | | | H04L |

The present search report has been drawn up for all claims

| Place of search | Date of completion of the search | Examiner |
|---|---|---|
| Munich | 23 August 2011 | Baltersee, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060269016 A1

**Non-patent literature cited in the description**

- **HOEHER, P. et al.** Two-Dimensional Pilot-Symbol-Aided Channel Estimation by Wiener Filtering. *Proc. IEEE International Conference on Acoustics, Speech, and Signal Processing,* April 1997, 1845-1848
- **SCHAFHUBER, D. et al.** Adaptive Wiener Filters for Time-Varying Channel Estimation in Wireless OFDM Systems. *Proc. IEEE International Conference on Acoustics, Speech and Signal Processing (ICASSP,* April 2003, vol. IV, 688-691
- **SCHULZE, H. et al.** Theory and Applications of OFDM and CDMA Wideband Wireless Communications. John Wiley & Sons, 2005, 189
- **SCHULZE, H. et al.** Theory and Applications of OFDM and CDMA Wideband Wireless Communications. John Wiley & Sons, 2005, 186-192